# EUROPEAN PATENT APPLICATION

(11) **EP 4 571 878 A1**
(43) Date of publication of application: **18.06.2025**
(21) Application number: 23851729.6
(22) Date of filing: 04.08.2023
(51) Int. Cl.: H01M 4/36

(54) **POSITIVE ELECTRODE ACTIVE MATERIAL, AND PREPARATION METHOD THEREFOR AND USE THEREOF**

(30) Priority: 10.08.2022 CN 202210957755
(71) Applicant: BYD Company Limited, Shenzhen, Guangdong 518118 (CN)
(72) Inventor: ZHANG, Yadong, Shenzhen, Guangdong 518118 (CN); LI, Xiangyu, Shenzhen, Guangdong 518118 (CN); JIN, Lina, Shenzhen, Guangdong 518118 (CN); YIN, Xiaoqiang, Shenzhen, Guangdong 518118 (CN)
(74) Representative: Mathys & Squire
(86) International application number: PCT/CN2023/111284
(87) International publication number: WO 2024/032508

(57) **Abstract**

A positive electrode active material and a preparation method therefor, a positive electrode comprising the positive electrode active material, a secondary battery comprising the positive electrode, and an electric device comprising the secondary battery. The general formula of the positive electrode active material comprises A₃V₂₋ₓMₓ(P_{1-y}E_{y}O₄)₃, wherein A represents an alkali metal element; M represents a doping element that substitutes V; M comprises one or more of transition metal elements and rare earth elements; E represents a doping element that substitutes P; E comprises one or more of As, Sb, and Bi; and 0≤x≤1, and 0<y≤1/3.

## Description

### CROSS-REFERENCE TO RELATED APPLICATIONS

The present disclosure claims priority to Chinese Patent Application No. 202210957755.5 filed on August 10, 2022 and entitled "POSITIVE ELECTRODE ACTIVE MATERIAL, AND PREPARATION METHOD THEREFOR AND USE THEREOF" which is incorporated herein by reference in its entirety.

### FIELD

The present disclosure relates to the technical field of batteries, and specifically to a positive electrode active material, and a preparation method therefor and use thereof.

### BACKGROUND

A battery positive electrode material is a key component of a battery, and has a great influence on the battery performance. For example, among numerous positive electrode materials for sodium ion batteries, sodium superionic conductor positive electrode materials are a polyanion-type material, which have become the focus of research in recent years because of their potential advantages such as stable crystal structures, adjustable working voltage and high theoretical specific capacity. However, such materials have shortcomings such as poor electronic conductivity, difficult diffusion of active ions, and low charging and discharging voltage plateau, which seriously restrict the large-scale application of such materials in sodium batteries.

It is believed in the industry that doping modification of the above materials can solve the existing problems. However, the existing doping schemes have no obvious effect on the improvement of the charging and discharging voltage and the diffusion of active ions.

### SUMMARY

In view of this, the present disclosure provides a positive electrode active material. By doping the phosphorus site of an alkali metal vanadium phosphate with at least one of As, Sb, and Bi, etc., the charging and discharging voltage and ionic conductivity of the material can be effectively improved.

Specifically, in a first aspect of the present disclosure, a positive electrode active material is provided. The general formula of the positive electrode active material comprises A₃V₂₋ₓMₓ(P_{1-y}E_{y}O₄)₃, where A represents an alkali metal element; M represents a doping element that substitutes V; M comprises one or more of a transition metal element and a rare earth element; E represents a doping element that substitutes P; E comprises one or more of As, Sb, and Bi; and 0≤x≤1, and 0<y≤1/3.

Appropriate substitution of element P in the lattice of A₃V₂(PO₄)₃ by doping an element of the same group having an ionic radius larger than P can cause cell expansion, expand the transport channel of A⁺ ions, reduce the energy barrier of A⁺ ion migration, improve the electronic conductivity of the material, and thus promote the improvement of the rate performance of the material. Moreover, the doping by element E at the phosphorus site can also improve the working voltage of the doped A₃V₂(PO₄)₃ material, which is conducive to improvement of the energy density.

In an embodiment, M comprises one or more of Cr, Mn, Fe, Co, Ni, Cu, Zn, Ti, Mo, Nb, Zr, La, and Ce.

In an embodiment, M comprises one or more of Cr, Mn, Fe, and Ti.

In an embodiment, E is one or more of As and Bi.

In an embodiment, M is Fe, and E is As.

In an embodiment, A comprises one or more of Li, Na, and K.

In an embodiment, x is in the range of 0.001≤x≤1.

In an embodiment, x is in the range of 0.01≤x≤1.

In an embodiment, x is in the range of 0.3≤x≤0.5.

In an embodiment, y is in the range of 1/18≤y≤1/3.

In an embodiment, y is 1/6, 1/3, or 1/18.

In an embodiment, y is in the range of 1/18≤y≤1/6.

In an embodiment, y is in the range of 1/6≤y≤1/3. In a second aspect of the present disclosure, a method for preparing a positive electrode active material is provided, which comprises the following steps.

Element sources of various elements in the positive electrode active material A₃V₂₋ₓMₓ(P_{1-y}E_{y}O₄)₃ to be prepared are mixed, to obtain a precursor material, where A represents an alkali metal element; M represents a doping element that substitutes V; M comprises one or more of a transition metal element and a rare earth element; E represents a doping element that substitutes P; E comprises one or more of As, Sb, and Bi; and 0≤x≤1, and 0<y≤1/3.

The precursor material is sintered, to obtain the positive electrode active material.

The method for preparing a positive electrode active material has a simple preparation process and is easy to operate, thus being suitable for use in large-scale production.

In an embodiment, the precursor material is prepared by a sol-gel method as follows. An A source, a vanadium source, a phosphorus source, an M source and an E source are mixed in a solvent, and the obtained mixed solution is heated and stirred until the solvent is evaporated to dryness, to obtain the precursor material.

In an embodiment, the precursor material is prepared by solid-phase ball milling as follows. An A source, a vanadium source, a phosphorus source, an M source and an E element-containing doping anion source are ball milled in the absence of a solvent, to obtain the precursor material.

In an embodiment, the sintering is carried out under an inert gas atmosphere, the sintering temperature is 400 to 900°C, and the sintering time is 10 to 30 h.

In an embodiment, the inert gas comprises one or more of nitrogen, argon, and helium.

In a third aspect of the present disclosure, a positive electrode is provided. The positive electrode comprises a positive electrode active material provided in the first aspect of the present disclosure. The positive electrode can be used to provide a battery with good rate performance and high energy density.

In a fourth aspect of the present disclosure, a secondary battery is provided. The secondary battery comprises a positive electrode provided in the third aspect of the present disclosure.

In a fifth aspect of the present disclosure, an electric device is provided. The electric device comprises a secondary battery provided in the fourth aspect of the present disclosure.

### BRIEF DESCRIPTION OF THE DRAWINGS

FIG. 1A shows the molecular configurations of Na₃V₂(PO₄)₃ (NVP) and its fully charged compound NaV₂(PO₄)₃.
FIG. 1B shows the molecular configurations of Na₃V_{1.5}Fe_{0.5}(PO₄)₃ (Fe-NVP) and its fully charged compound NaV_{1.5}Fe_{0.5}(PO₄)₃.
FIG. 1C shows the molecular configurations of Na₃V_{1.5}Fe_{0.5}(P_{17/18}As_{1/}18O₄)₃ (As1-Fe-NVP) and its fully charged compound in Example 1.
FIG. 1D shows the molecular configurations of Na₃V_{1.5}Fe_{0.5}(P_{5/6}As_{1/6}O₄)₃ (As₃-Fe-NVP) and its fully charged compound in Example 2.
FIG. 1E shows the molecular configurations of Na₃V_{1.5}Fe_{0.5}(P_{2/3}As_{1/3}O₄)₃ (As₆-Fe-NVP) and its fully charged compound in Example 3.
FIG. 2 is a schematic flowchart of a method for preparing a positive electrode active material in an embodiment of the present disclosure.
FIG. 3 summarizes the X-ray diffraction (XRD) patterns of the positive electrode active materials provided in Examples 1 to 3 and Comparative Examples 1 to 2 of the present disclosure.
FIG. 4 summarizes the cycle performance curves of the batteries prepared with the positive electrode active materials provided in Examples 2, 4 to 5 and 10 of the present disclosure and the battery prepared with the material of Comparative Example 1 at 0.5C.
FIG. 5 summarizes the curves of the specific discharging capacity vs the number of cycles of the batteries prepared with the positive electrode active materials provided in Examples 2, 4 to 5 and 10 of the present disclosure and the battery prepared with the material of Comparative Example 1 at different rates.

### DETAILED DESCRIPTION

Sodium vanadium phosphate (Na₃V₂(PO₄)₃, NVP) is a common sodium superionic conductor (NASICON) positive electrode material, having stable crystal structure, good safety performance, and high theoretical specific capacity, but poor ionic conductivity and electronic conductivity, and thus poor rate performance and low charging and discharging voltage plateau, which are not conducive to the improvement of the energy density of the sodium battery.

In view of the problems associated with NVP, an embodiment of the present disclosure provides a positive electrode active material. The general formula of the positive electrode active material comprises A₃V₂₋ₓMₓ(P_{1-y}E_{y}O₄)₃, where A represents an alkali metal element; M represents a doping element that substitutes V; M comprises one or more of a transition metal element and a rare earth element; E represents a doping element that substitutes P; E comprises one or more of As, Sb, and Bi; and x represents the molar ratio at which element V is replaced by element M, y represents the molar ratio at which element P is replaced by element E, 0≤x≤1, and 0<y≤1/3.

Element E is an element of the same group having an ionic radius larger than P. E can be easily doped into the lattice of A₃V₂(PO₄)₃, to replace P at some positions, and cause cell expansion. This expands the transport channel of A⁺ ions, reduce the energy barrier of migration, and reduce the repulsive effect of surrounding atoms, thus improving the migration rate of A⁺ ions and improving the rate performance. Furthermore, the crystal structure of the A₃V₂(PO₄)₃ material comprises a PO₄tetrahedron and a VO₆ octahedron, and they are connected by common oxygen (O) atoms at the vertices. The doping by element E at the phosphorus site will change the charge value of O atoms around it, which in turn forces the charge environment around V atoms to change, and induces element V to undergo a redox reaction at a high potential, thus improving the working voltage of the doped A₃V₂(PO₄)₃ material, and facilitating the improvement of the energy density of the material. Moreover, the doping by element E at the phosphorus site can also reduce the band gap of the M doped A₃V₂(PO₄)₃ material, to cause more electrons to gather near the Fermi surface, and improve the electronic conductivity of the material. Additionally, the doping amount by element E is controlled not to be too high, to ensure that the material has not only good structural stability, but also good electronic conductivity, good ionic conductivity, and high charging and discharging voltage plateau, Therefore, the battery can be promoted to have good safety, good rate performance, and high energy density, etc.

Further, when an appropriate amount of element E is used for doping at P sites and an appropriate amount of metal element M for doping at vanadium (V) sites in A₃V₂(PO₄)₃, with the synergistic effect of doping of element M at V sites and doping of element E at P sites, the voltage plateau of the dually doped material can be further improved compared with the A₃V₂(P_{1-y}E_{y}O₄)₃ material doped with E alone and the A₃V₂₋ₓMₓ(PO₄)₃ material doped with element M alone. The charging and discharging voltage plateau of the dually doped material is obviously improved, and the energy barrier of A⁺ ion migration is obvious reduced.

In an embodiment of the present disclosure, M may comprise one or more of chromium (Cr), manganese (Mn), iron (Fe), cobalt (Co), nickel (Ni), copper (Cu), zinc (Zn), titanium (Ti), molybdenum (Mo), niobium (Nb), zirconium (Zr), La (lanthanum), and cerium (Ce). However, the present disclosure is not limited thereto.

In some embodiments of the present disclosure, M comprises one or more of Cr, Mn, Fe, Co, Ni, Cu, Zn, Ti, Mo, Nb, and Zr. The cost of these elements is lower than that of lanthanide elements La and Ce. The ionic radii of Ti, Mo, Nb and Zr are larger than that of V ions. The introduction of these doping elements will also cause the lattice expansion of A₃V₂(PO₄)₃, thus facilitating the migration of A⁺ ions. However, the ionic radii of Cr, Mn, Fe, Co, Ni, Cu, and Zn are slightly smaller than that of V ions. If these elements are doped into A₃V₂(PO₄)₃ simply, the cell volume will be reduced; but after the introduction of the above-mentioned element E, the cell volume will be increased, which promotes the improvement of the diffusion performance of the material. In some other embodiments of the present disclosure, to better balance the cost of element M and its influence on the ionic conductivity and working voltage of the material, element M can be one or more selected from Ti, Cr, Mn and Fe. These elements are also helpful for improving the working voltage of the doped materials, and can easily replace vanadium. Among them, Fe has the lowest cost.

In an embodiment of the present disclosure, E comprises at least one of As, Sb and Bi. The ionic radii of As, Sb and Bi are all larger than that of P. By doping them at P sites (that is, replacing the position of P atoms in the crystal structure of A₃V₂(PO₄)₃ with E atoms), the cell volume of A₃V₂₋ₓMₓ(P_{1-y}E_{y}O₄)₃ can be appropriately expanded, to reduce the energy barrier of A ion migration. The ionic radii of As, Sb and Bi are not unduly larger than that of P, which can ensure that the material has not only higher stability of crystal structure, but also higher ionic conductivity. In some embodiments, element E is As and/or Bi. As and P are nonmetallic elements having similar properties, and As replaces P easier.

In some embodiments, element M is Fe, and element E is As. In this case, the preparation cost of A₃V₂₋ₓMₓ(P_{1-y}E_{y}O₄)₃ is low, and P is replaced by As, whereby the migration rate of A ions is improved to improve the rate performance of the material, and the working voltage is improved to improve the energy density of the material.

In an embodiment of the present disclosure, element A may specifically comprise one or more of Li, Na, and K, etc. Element A can be selected according to the specific type of the secondary battery. For example, when the battery active material A₃V₂₋ₓMₓ(P_{1-y}E_{y}O₄)₃ is used in a sodium secondary battery, element A is Na.

In some embodiments of the present disclosure, x is in the range of 0.001≤x≤1, and further in the range of 0.01≤x≤1. By controlling the doping amount of M within the above range, the loss of electrochemical activity of A₃V₂₋ₓMₓ(P_{1-y}E_{y}O₄)₃ caused by a too high doping amount of element M can be avoided, and failure to improve the electronic conductivity due to a too low doping amount of element M is also avoided. In some embodiments, s is in the range of 0.001 to 0.5, preferably in the range of 0.01 to 0.5, further preferably in the range of 0.1 to 0.5, and more preferably in the range of 0.3 to 0.5.

In some embodiments of the present disclosure, y is in the range of 1/18≤y≤1/3. By controlling the doping amount of element E in the above range, the cell volume of A₃V₂₋ₓMₓ(P_{1-y}E_{y}O₄)₃ is obviously increased and the ionic conductivity is improved, without increasing the risk of structural disintegration due to excessive changes in its crystal structure. Therefore, the material is ensured to have good cycle performance, the working voltage of the material is obviously improved, and the band gap of the material is extremely narrow, thus improving the conductivity.

In some embodiments of the present disclosure, y is 1/6. In this case, the energy barrier for migration of A ions in the A₃V₂₋ₓMₓ(P_{1-y}E_{y}O₄)₃ material is extremely low, the rate performance of the material is excellent, and the cycle performance is also excellent. In some other embodiments, y is 1/3. In this case, the A₃V₂₋ₓMₓ(P_{1-y}E_{y}O₄)₃ material has the highest working voltage and the most excellent electronic conductivity. In some other embodiments, y is 1/18. In this case, the A₃V₂₋ₓMₓ(P_{1-y}E_{y}O₄)₃ material has a very high degree of crystallinity, and a very good structural stability. In some embodiments, y is in the range of 1/18≤y≤1/6. In some other embodiments, y is in the range of 1/6≤y≤1/3.

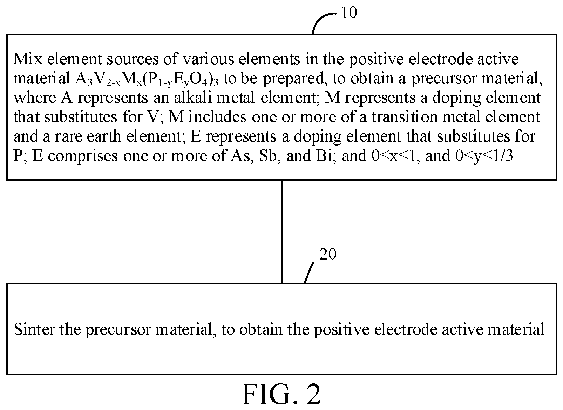

Correspondingly, as shown in FIG. 2, an embodiment of the present disclosure provides a method for preparing the positive electrode active material. Specifically, the method for preparing the positive electrode active material comprises the following steps.

10: Element sources of various elements in the positive electrode active material A₃V₂₋ₓMₓ(P_{1-y}E_{y}O₄)₃ to be prepared are mixed, to obtain a precursor material, where A represents an alkali metal element; M represents a doping element that substitutes V; M comprises one or more of a transition metal element and a rare earth element; E represents a doping element that substitutes P; E comprises one or more of As, Sb, and Bi; and 0≤x≤1, and 0<y≤1/3.

20: The precursor material is sintered, to obtain the positive electrode active material.

The method for preparing the positive electrode active material has a simple preparation process and is easy to operate, thus being suitable for use in large-scale production.

In Step 10, the various element sources used to prepare the positive electrode active material comprise an A source, a vanadium source, a phosphorus source, an M source containing a doping metal element M, and an E source containing a doping element E. The A source, vanadium source, M source, phosphorus source, and E source can be weighed according to the weight ratio of elements A, V, M, P, and E of 3: (2-x): x: (1-y): Y. Additionally, considering that the alkali metal element is prone to element loss in the subsequent sintering process, the A source may be in 10% excess or less.

The A source may comprise one or more of a sodium source, a lithium source, and a potassium source, specifically one or more of a nitrate, an oxalate, an acetate, an acetylacetonate, a carbonate, a sulfate, a phosphate, a hydroxide and the like of an alkali metal element. The vanadium source may be one or more of a trivalent vanadium source, a tetravalent vanadium source, and a pentavalent vanadium source, etc. It can be specifically an oxide (such as vanadium pentoxide, vanadium tetraoxide, vanadium trioxide, etc.), a hydroxide, a metavanadate (such as ammonium metavanadate, and sodium metavanadate, etc.), a nitrate, a sulfate, a phosphate, an oxalate, and an acetate of vanadium, vanadium acetylacetonate, and vanadyl acetylacetonate. The M source containing a doping metal element M may be similar to the vanadium source mentioned above, and may be one or more selected from an oxide, a hydroxide, a nitrate, a sulfate, a phosphate, an oxalate, an acetate, and an acetylacetonate of element M. The phosphorus source may be a polyanion group source of P, for example, an oxyacid group source of P. In some embodiments, the phosphorus source may comprise one or more of H₃PO₄, Na₃PO₄, and a dihydrogen phosphate, a hydrogen phosphate, and an orthophosphate of Li⁺, Na⁺, K⁺, and NH₄⁺. The E source may be one or more of oxides, acids, salts and others corresponding to As, Sb and Bi. In some embodiments, the E source can be a doping anion source containing element E, such as one or more of oxyacids and oxysalts corresponding to As, Sb and Bi. Among the above element sources, the phosphorus source may be the same substance as the alkali metal source, vanadium source or M source, for example, sodium phosphate can serve as the phosphorus source and the sodium source.

In the present disclosure, the mixing method can be a liquid-phase method or a solid-phase method. The solid-phase method may be one or more of mechanical stirring, ball milling, and mechanical fusion, etc. The liquid-phase method may be sol-gel method, hydrothermal/solvothermal method, and liquid-phase high-energy ball milling method, etc. The solvent used in the liquid-phase method may be one or more of water, ethanol, and acetone, etc.

In some embodiments, the precursor material is prepared by solid-phase ball milling. The process is specifically as follows. The alkali metal source, vanadium source, phosphorus source, M source and doping anion source containing element E are ball-milled in the absence of a solvent, to obtain the precursor material.

In some other embodiments, the precursor material is prepared by sol-gel method.

The process is specifically as follows. The alkali metal element source, vanadium source, and phosphorus source are mixed with the M source and doping anion source containing element E in a solvent, and the obtained mixed solution is heated and stirred until the solvent is evaporated to dryness, to obtain the precursor material. The various element sources will react in the process of heating and stirring, to obtain the precursor material. The precursor material can be transformed into the required positive electrode active material after sintering. In an embodiment of the present disclosure, the temperature of the heating and stirring can be 30 to 200°C, for example, 40 to 100°C, depending on the boiling point of the solvent used. The stirring speed during the heating and stirring can be 300 to 900 rpm, and the time can be 1 to 6 h.

In an embodiment of the present disclosure, the sintering is carried out under an inert gas atmosphere, the sintering temperature is 400 to 900°C, and the sintering time is 10 to 30 h. The inert gas may be one or more of nitrogen, argon and helium, and argon and helium are preferred.

An embodiment of the present disclosure further provides a positive electrode. The positive electrode comprises the positive electrode active material. The positive electrode can be used to prepare secondary batteries with excellent performance such as good rate performance and high energy density.

In an embodiment of the present disclosure, the positive electrode generally comprises a positive electrode current collector and a positive electrode active material layer arranged on at least one side surface of the positive electrode current collector, where the positive electrode active material layer comprises the positive electrode active material. Additionally, the positive electrode active material layer may also contain a binder and an optional conductive agent. The binder and the conductive agent can be conventional choices in the field of batteries.

The positive electrode current collector may be various materials suitable for use as the positive electrode current collector, comprising, but not limited to, a metallic foil, an alloy foil, a metallized polymer film, or the aforementioned materials coated with carbon. The metallic foil may be an aluminum foil, the alloy foil may be an aluminum alloy foil, and the metal plated on the surface of the polymer film may be an aluminum layer or an aluminum alloy layer.

An embodiment of the present disclosure further provides a secondary battery, the secondary battery comprises the positive electrode. The secondary battery may be specifically a lithium secondary battery, a sodium secondary battery or a potassium secondary battery.

Due to the use of doped A₃V₂(PO₄)₃ as a positive electrode active material, the secondary battery has high energy density, good rate performance and good cycle performance.

An embodiment of the present disclosure also provides an electric device. The electric device comprises the secondary battery. The electric device may be vehicles, ships, 3C products (comprising computers, communications, consumer electronics, etc.), or energy storage systems.

As the doped A₃V₂(PO₄)₃ is used as a positive electrode active material in the secondary battery, the secondary battery has high energy density, good rate performance and good cycle performance. When used in an electric device, it can improve the performance and market competitiveness of the electric device.

The secondary battery may be a liquid battery using a liquid electrolyte solution, or a semi-solid or solid battery using a semi-solid electrolyte or a solid electrolyte. In some embodiments, the secondary battery may comprise a positive electrode sheet, a negative electrode sheet, and a separator and an electrolyte solution arranged between the positive electrode sheet and the negative electrode sheet. In some other embodiments, the secondary battery may comprise a positive electrode sheet, a negative electrode sheet, and a semi-solid electrolyte or a solid electrolyte arranged between the positive electrode sheet and the negative electrode sheet. Additionally, when a semi-solid electrolyte or a solid electrolyte is used, the positive electrode sheet and the negative electrode sheet may also contain a semi-solid electrolyte material or a solid electrolyte material.

The technical solution of the present disclosure will be further described in detail by way of examples.

### Example 1

A positive electrode active material has a general formula of Na₃V_{1.5}Fe_{0.5}(P_{17/18}As_{1/18}O₄)₃ (As₁-Fe-NVP).

The As1-Fe-NVP was prepared as follows.
(1) According to a molar ratio of Na element: V element: Fe element: P element: As element= 3: 1.5: 0.5: 17/18: 1/18, a sodium source (specifically sodium nitrate), a vanadium source (specifically vanadium pentoxide), a Fe source (specifically ferrous oxide), a phosphorus source (specifically phosphoric acid), and an As source (specifically ammonium arsenate) were weighed, mixed in the solvent ethanol, and heated at 80°C with stirring, until the solvent was evaporated to dryness, to obtain a precursor material.
(2) The precursor material was sintered for 12 h under a nitrogen atmosphere at a sintering temperature of 800°C, to obtain Na₃V_{1.5}Fe_{0.5}(P_{17/18}As_{1/18}O₄)₃.

### Example 2

A positive electrode active material has a general formula of Na₃V_{1.5}Fe_{0.5}(P_{5/6}As_{1/6}O₄)₃ (As₃-Fe-NVP).

The preparation method of As₃-Fe-NVP was the same as that in Example 1, except that: the amounts of the P source and the As source were changed, such that the molar ratio of the Fe element: P element: As element was 0.5: 5/6: 1/6.

### Example 3

A positive electrode active material has a general formula of Na₃V_{1.5}Fe_{0.5}(P_{2/3}As_{1/3}O₄)₃ (As₆-Fe-NVP).

The preparation method of Ass-Fe-NVP was the same as that in Example 1, except that: the amounts of the P source and the As source were changed, such that the molar ratio of the Fe element: P element: As element was 0.5: 2/3: 1/3.

### Comparative Example 1

A positive electrode active material has a general formula of Na₃V₂(PO₄)₃ (NVP).

The preparation method of NVP was the same as that in Example 1, except that: no As source and Fe source were introduced.

### Comparative Example 2

A positive electrode active material has a general formula of Na₃V_{1.5}Fe_{0.5}(PO₄)₃ (Fe-NVP).

The preparation method of Fe-NVP was the same as that in Example 1, except that: no As source was introduced.

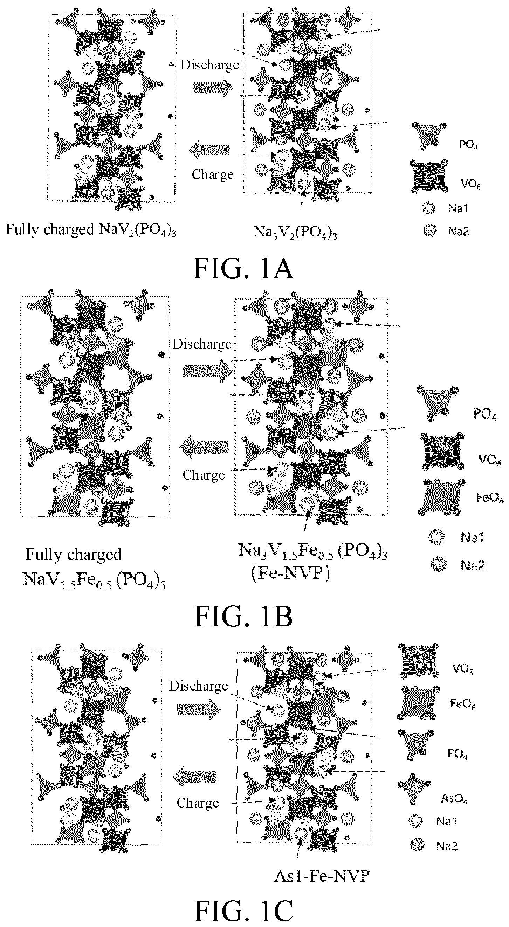

FIG. 1A shows the molecular configurations of Na₃V₂(PO₄)₃ (NVP) and its fully charged compound NaV₂(PO₄)₃. FIG. 1B shows the molecular configurations of Na₃V_{1.5}Fe_{0.5}(PO₄)₃ (Fe-NVP) and its fully charged compound NaV_{1.5}Fe_{0.5}(PO₄)₃. FIG. 1C shows the molecular configurations of As₁-Fe-NVP and its fully charged compound NaV_{1.5}Fe_{0.5}(P_{17/18}As_{1/18}O₄)₃ in Example 1.

In FIG. 1A, in the cell of Na₃V₂(PO₄)₃, 12 V atoms are all at the centers of various VO₆ octahedrons, 18 P atoms are all at the centers of various PO₄ tetrahedrons, and 72 O atoms are used to connect the octahedrons and tetrahedrons to form the skeleton structure of the A₃V₂(PO₄)₃ compound. The remaining 18 Na atoms uniformly occupy the vacancies in the above skeleton structure. There are two kinds of Na sites in different oxygen environments in the above-mentioned cell, namely 6b site at the center of the octahedron and 18e site at the center of the tetrahedron, which are marked as Na1 site and Na2 site respectively. In the Na₃V₂(PO₄)₃ cell, 6 Na atoms at Na1 sites (as indicated by the dashed arrow) and 12 Na atoms at Na2 sites are present. The sodium ion at Na1 site is difficult to be extracted, and usually the sodium ion at Na2 site is deintercalated/intercalated in the charging and discharging process, to complete the transformation in crystal structure between the uncharged Na₃V₂(PO₄)₃ and the fully charged NaV₂(PO₄)₃. 6 Na ions in the cell of fully charged NaV₂(PO₄)₃ occupy the Na1 site.

In FIG. 1B, Fe-NVP can be regarded as a molecular configuration of Na₃V₂(PO₄)₃ in FIG. 1A in which 3 Fe atoms are uniformly substituted for 3 of the 12 V atoms. The fully charged compound of Fe-NVP is NaV_{1.5}Fe_{0.5}(PO₄)₃, which has a configuration different from Fe-NVP in that the Na atom at the Na2 site is removed.

In FIG. 1C, As₁-Fe-NVP can be regarded as a molecular configuration of Fe-NVP in FIG 1B in which one P atom in the 3rd layer of P atoms is replaced by 1 As atom (indicated by a solid arrow). The fully charged compound of As₁-Fe-NVP is NaV_{1.5}Fe_{0.5}(P_{17/18}As_{1/18}O₄)₃, which has a configuration different from As₁-Fe-NVP in that the Na atom at the Na2 position is removed (the dotted arrow indicates the Na atom at the Na1 position, and the remaining spherical atoms are the Na2 atoms).

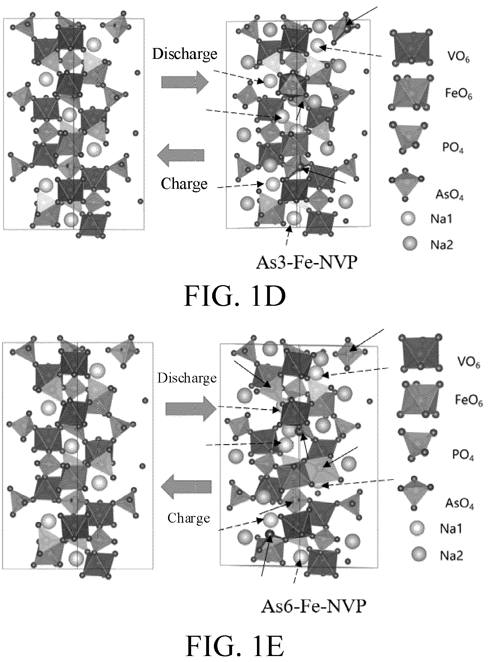

FIG. 1D shows the molecular configuration of As₃-Fe-NVP and its fully charged compound NaV_{1.5}Fe_{0.5}(P_{5/6}As_{1/6}O₄)₃ in Example 2. The molecular configuration of As₃-Fe-NVP is equivalent to a molecular configuration of NVP in which 3 of the 12 V atoms are evenly replaced by 3 Fe atoms; and one P atom is replaced by an As atom in every other layer of the 6 layers of P atoms, and 3 replacements by As atoms (indicated by solid arrows) are made in total.

FIG. 1E shows the molecular configurations of As₆-Fe-NVP and its fully charged compound NaV_{1.5}Fe_{0.5}(P_{2/3}As_{1/3}O₄)₃ in Example 3. The molecular configuration of As₆-Fe-NVP is equivalent to a molecular configuration of NVP in which 3 of the 12 V atoms are evenly replaced by 3 Fe atoms; and one P atom is replaced by an As atom in each layer of the 6 layers of P atoms, and 6 replacements by As atoms (indicated by solid arrows) are made in total.

According to the molecular configurations of the compounds shown in FIGs. 1A to 1E, the cell volumes, the cell volume change rate (%) of the uncharged vs fully charged state, the open-circuit voltage, the band gap, and the energy barrier for sodium ion migration of NVP, Fe-NVP, As₁-Fe-NVP, As₃-Fe-NVP, and As₆-Fe-NVP can be known according to the first principle thinking prediction method. The relevant results are summarized in Table 1 below.

The cell volume change rate of the uncharged vs fully charged state is described with As₁-Fe-NVP as an example. The cell volume change rate of the uncharged vs fully charged state is obtained by dividing the absolute difference between the cell volume of the fully charged NaV_{1.5}Fe_{0.5}(P_{17/18}As_{1/18}O₄)₃ and the cell volume of the uncharged Na₃V_{1.5}Fe_{0.5}(P_{17/18}As_{1/18}O₄)₃(As₁-Fe-NVP) by the cell volume of the uncharged state. For the open-circuit voltage of the uncharged compound A₃V₂₋ₓMₓ(P_{1-y}E_{y}O₄)₃, the lattice constants and the total energy of the cell structures of the uncharged and fully charged compounds can be obtained from their respective molecular configurations, with which the open-circuit voltage of A₃V₂₋ₓMₓ(P_{1-y}E_{y}O₄)₃ is calculated. The band gap can be calculated from a distribution curve of density of state of the material. The energy barrier for Na ion migration can be calculated by Nudged Elastic Band (NEB) method or improved NEB method.

**Table 1**

| | Abbreviation of structural formula | Cell volume (Å³) | Volume change rate of uncharged vs fully charged state (%) | Open-circuit voltage (V) | Band gap (eV) | Energy barrier for Na ion migration (eV) |
|---|---|---|---|---|---|---|
| Comparative Example 1 | NVP | 1440.51 | 5.85 | 3.23 | 2.32 | 0.612 |
| Comparative Example 2 | Fe-NVP | 1422.06 | 7.47 | 3.51 | 0.82 | 0.654 |
| Example 1 | As₁-Fe-NVP | 1430.38 | 7.62 | 3.58 | 0.62 | 0.581 |
| Example 2 | As₃-Fe-NVP | 1439.22 | 7.35 | 3.73 | 0.12 | 0.482 |
| Example 3 | As₆-Fe-NVP | 1470.412 | 8.52 | 3.76 | 0.13 | 0.465 |

As can be seen from Table 1, for the cell volume of each compound, when NVP is doped with Fe alone, the cell volume is reduced because the atomic radius of Fe is smaller than that of V. When As is further doped into NVP doped with Fe, the cell volume becomes larger with the increase of the doping concentration of As, which indicates that the introduction of As promotes the cell expansion.

The doping of Fe alone and the co-doping of Fe and As result in different cell volume changes of the uncharged vs charged states of the material. As can be seen from Table 1, As₃-Fe-NVP has the smallest cell volume change of the uncharged vs fully charged states and the highest stability of crystal structure. Additionally, although the cell volume change rates of Fe-NVP, As₁-Fe-NVP, and As₃-Fe-NVP of the uncharged vs fully charged states is larger than that of NVP, their crystal structures are stable, to ensure that the structure will not disintegrate due to excessive deformation during the charging and discharging process.

For the open-circuit voltage of each compound, as can be seen from Table 1, the open-circuit voltage of the material co-doped with Fe and As (Examples 1 to 3) is obviously improved compared with undoped NVP and Fe-NVP doped with iron alone. When the material is used in a sodium battery, the energy density of the battery is enhanced. Additionally, with the increase of the doping concentration of As, the open-circuit voltage of NVP co-doped with Fe and As increases constantly, thus increasing the energy density of the battery. Because the open-circuit voltage of a material is generally higher than its working voltage, when the open circuit voltage of material A is higher than that of material B, the working voltage of material A is generally higher than that of material B. Therefore, the energy density of the prepared battery can be estimated by comparing the open-circuit voltages of different materials.

For the band gap of each compound, as can be seen from Table 1, the band gap of undoped NVP is wider, indicating a larger resistance. The band gap of Fe-NVP doped with iron alone can be reduced to 0.82eV; and co-doping of Fe and As can further reduce the band gap. As₃-Fe-NVP and As₆-Fe-NVP have almost no band gap, indicating that they have high conductivity.

For the energy barrier for migration of each compound, as can be seen from Table 1, the energy barrier for migration of Na in NVP is relatively high and about 0.612eV. The energy barrier for Na ion migration is increased after the introduction of Fe doped alone. This is mainly because the ionic radius of Fe is small, and the doping of iron alone causes the cell volume of NVP to decrease. In contrast, the energy barrier for migration of Na ions in As₁-Fe-NVP, As₃-Fe-NVP, and As₆-Fe-NVP co-doped with Fe and As is obviously reduced, and the ionic conductivity is improved, thus improving the charging and discharging rate of the material.

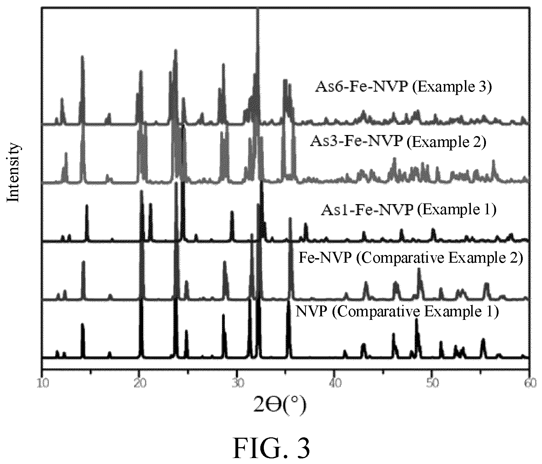

Additionally, FIG. 3 also summarizes the measured XRE patterns of NVP, Fe-NVP, As₁-Fe-NVP, As₃-Fe-NVP and As₆-Fe-NVP. As can be seen from Fig. 3, compared with the main diffraction peak in the XRE pattern of undoped NVP, the position of the main peak is slightly shifted to the right and the lattice parameters are in high consistency with NVP on a whole after Fe doping. On the basis of Fe doping, with the doping of As, the main peak moves to the right at a low concentration (such as As₁-Fe-NVP), and the half-peak width of some high-intensity peaks is slightly widened and the intensity of some low-intensity peaks are also improved to varying degrees as the doping concentration increases (such as As₁-Fe-NVP). This shows that the co-doping of Fe and As can change the crystal growth direction of NVP, and it becomes possible for the growth of face that was not easy to grow before, suggesting that the co-doping of Fe and As can regulate the morphology and size of NVP.

### Example 4

A positive electrode active material has a general formula of Na₃V_{1.5}Fe_{0.5}(P_{5/6}Sb_{1/6}O₄)₃.

The preparation method of Na₃V_{1.5}Fe_{0.5}(P_{5/6}Sb_{1/6}O₄)₃ was the same as that for Na₃V_{1.5}Fe_{0.5}(P_{5/6}As_{1/6}O₄)₃ in Example 2, except that: the As source was replaced by a Sb source (specifically sodium antimonate).

### Example 5

A positive electrode active material has a general formula of Na₃V_{1.5}Fe_{0.5}(P_{5/6}Bi_{1/6}O₄)₃.

The preparation method of Na₃V_{1.5}Fe_{0.5}(P_{5/6}Bi_{1/6}O₄)₃ was the same as that for Na₃V_{1.5}Fe_{0.5}(P_{5/6}As_{1/6}O₄)₃ in Example 2, except that: the As source was replaced by a Bi source (specifically ammoniun bismuth citrate).

### Example 6

A positive electrode active material has a general formula of Na₃V_{1.8}Fe_{0.2}(P_{5/6}As_{1/6}O₄)₃.

The preparation method of Na₃V_{1.8}Fe_{0.2}(P_{5/6}As_{1/6}O₄)₃ was the same as that for Na₃V_{1.5}Fe_{0.5}(P_{5/6}As_{1/6}O₄)₃ in Example 2, except that: the amounts of the Fe source and the V source were changed, such that the molar ratio of V: Fe element was 1.8:0.2.

### Example 7

A positive electrode active material has a general formula of Na₃V_{1.99}Fe_{0.01}(P_{5/6}As_{1/6}O₄)₃.

The preparation method of Na₃V_{1.99}Fe_{0.001}(P_{5/6}As_{1/6}O₄)₃ was the same as that for Na₃V_{1.5}Fe_{0.5}(P_{5/6}As_{1/6}O₄)₃ in Example 2, except that: the amounts of the Fe source and the V source were changed, such that the molar ratio of V: Fe element was 1.99:0.01.

### Example 8

A positive electrode active material has a general formula of Na₃V_{1.5}Ti_{0.5}(P_{5/6}As_{1/6}O₄)₃.

The preparation method of Na₃V_{1.5}Ti_{0.5}(P_{5/6}As_{1/6}O₄)₃ was the same as that for Na₃V_{1.5}Fe_{0.5}(P_{5/6}As_{1/6}O₄)₃ in Example 2, except that: the Fe source was replaced by a Ti source (specifically titania).

### Example 9

A positive electrode active material has a general formula of Na₃V_{1.5}Cr_{0.5}(P_{5/6}As_{1/6}O₄)₃.

The preparation method of Na₃V_{1.5}Cr_{0.5}(P_{5/6}As_{1/6}O₄)₃ was the same as that for Na₃V_{1.5}Fe_{0.5}(P_{5/6}As_{1/6}O₄)₃ in Example 2, except that: the Fe source was replaced by a Cr source (specifically chromium oxide).

### Example 10

A positive electrode active material has a general formula of Na₃V_{1.5}Nb_{0.5}(P_{5/6}As_{1/6}O₄)₃.

The preparation method of Na₃V_{1.5}Nb_{0.5}(P_{5/6}As_{1/6}O₄)₃ was the same as that for Na₃V_{1.5}Fe_{0.5}(P_{5/6}As_{1/6}O₄)₃ in Example 2, except that: the Fe source was replaced by a Nb source (specifically sodium niobate).

### Example 11

A positive electrode active material has a general formula of Na₃V₂(P_{17/18}As_{1/18}O₄)₃.

The preparation method of Na₃V₂(P_{17/18}As_{1/18}O₄)₃ was the same as that in Example 1, except that no doping source-Fe source was used.

### Example 12

A positive electrode active material has a general formula of Na₃V₂(P_{5/6}As_{1/6}O₄)₃.

The preparation method of Na₃V₂(P_{5/6}As_{1/6}O₄)₃ was the same as that in Example 2, except that no doping source-Fe source was used.

### Example 13

A positive electrode active material has a general formula of Na₃V₂(P_{2/3}As_{1/3}O₄)₃.

The preparation method of Na₃V₂(P_{2/3}As_{1/3}O₄)₃ was the same as that in Example 3, except that: no doping source-Fe source was used.

### Example 14

A positive electrode active material has a general formula of Na₃VFe(P_{5/6}As_{1/6}O₄)₃.

The preparation method of Na₃VFe(P_{5/6}As_{1/6}O₄)₃ was the same as that for Na₃V_{1.5}Fe_{0.5}(P_{5/6}As_{1/6}O₄)₃ in Example 2, except that: the amounts of the Fe source and the V source were changed, such that the molar ratio of V: Fe element was 1: 1.

### Example 15

A positive electrode active material has a general formula of Na₃V_{1.5}Fe_{0.5}(P_{35/36}As_{1/36}O₄)₃. The preparation method was the same as that for Na₃V_{1.5}Fe_{0.5}(P_{5/6}As_{1/6}O₄)₃ in Example 2, except that the amounts of the P source and the As source were changed, such that the molar ratio of the Fe element: P element: As element was 0.5: 35/36: 1/36.

### Example 16

A positive electrode active material has a general formula of Na₃V_{1.5}Mn_{0.5}(P_{5/6}As_{1/6}O₄)₃.

### Example 17

A positive electrode active material has a general formula of Na₃V_{1.5}Mn_{0.5}(P_{5/6}Bi_{1/6}O₄)₃.

### Example 18

A positive electrode active material has a general formula of Na₃V₁Mn₁(P_{5/6}Bi_{1/6}O₄)₃.

### Example 19

A positive electrode active material has a general formula of Na₃V_{1.5}Mn_{0.5}(P_{5/6}Sb_{1/6}O₄)₃.

### Example 20

A positive electrode active material has a general formula of Na₃V_{1.5}Ti_{0.5}(P_{5/6}Bi_{1/6}O₄)₃.

Table 2 below summarizes relevant electrochemical performances of positive electrode active materials in Examples 4 to 20.

**Table 2**

| | Structural formula | Cell volume (Å³) | Volume change rate of uncharged vs fully charged state (%) | Open-circuit voltage (V) | Band gap (eV) | Energy barrier for Na ion migration (eV) |
|---|---|---|---|---|---|---|
| Example 4 | Na₃V_{1.5}Fe_{0.5}(P_{5/6}Sb_{1/6}O₄)₃ | 1442.63 | 6.62 | 3.63 | 0.4 | 0.473 |
| Example 5 | Na₃V_{1.5}Fe_{0.5}(P_{5/6}Bi_{1/6}O₄)₃ | 1445.46 | 6.96 | 3.61 | 0.6 | 0.462 |
| Example 6 | Na₃V_{1.8}Fe_{0.2}(P_{5/6}As_{1/6}O₄)₃ | 1444.29 | 6.82 | 3.46 | 0.9 | 0.458 |
| Example 7 | Na₃V_{1.99}Fe_{0.01}(P_{5/6}As_{1/6}O₄)₃ | 1447.65 | 6.12 | 3.49 | 1.6 | 0.468 |
| Example 8 | Na₃V_{1.5}Ti_{0.5}(P_{5/6}As_{1/6}O₄)₃ | 1451.55 | 7.52 | 3.65 | 0.9 | 0.531 |
| Example 9 | Na₃V_{1.5}Cr_{0.5}(P_{5/6}As_{1/6}O₄)₃ | 1449.65 | 7.33 | 3.51 | 0.65 | 0.512 |
| Example 10 | Na₃V_{1.5}Nb_{0.5}(P_{5/6}As_{1/6}O₄)₃ | 1468.33 | 7.17 | 3.79 | 0.55 | 0.432 |
| Example 11 | Na₃V₂(P_{17/18}As_{1/18}O₄)₃ | 1445.54 | 7.22 | 3.36 | 0.75 | 0.521 |
| Example 12 | Na₃V₂(P_{5/6}As_{1/6}O₄)₃ | 1453.19 | 6.75 | 3.42 | 0.53 | 0.462 |
| Example 13 | Na₃V₂(P_{2/3}As_{1/3}O₄)₃ | 1479.94 | 7.92 | 3.51 | 0.45 | 0.425 |
| Example 14 | Na₃VFe(P_{5/6}As_{1/6}O₄)₃ | 1429.16 | 7.92 | 3.57 | 0.11 | 0.594 |
| Example 15 | Na₃V_{1.5}Fe_{0.5}(P_{35/36}As_{1/36}O₄)₃ | 1425.38 | 7.49 | 3.53 | 0.45 | 0.601 |
| Example 16 | Na₃V_{1.5}Mn_{0.5}(P_{5/6}As_{1/6}O₄)₃ | 1450.23 | 7.09 | 3.76 | 1.21 | 0.484 |
| Example 17 | Na₃V_{1.5}Mn_{0.5}(P_{5/6}Bi_{1/6}O₄)₃ | 1471.65 | 7.14 | 3.75 | 1.11 | 0.496 |
| Example 18 | Na₃V₁Mn₁(P_{5/6}Bi_{1/6}O₄)₃ | 1467.33 | 6.98 | 3.86 | 1.39 | 0.491 |
| Example 19 | Na₃V_{1.5}Mn_{0.5}(P_{5/6}Sb_{1/6}O₄)₃ | 1462.65 | 7.12 | 3.71 | 1.35 | 0.501 |
| Example 20 | Na₃V_{1.5}Ti_{0.5}(P_{5/6}Bi_{1/6}O₄)₃ | 1478.54 | 6.87 | 3.54 | 0.46 | 0.496 |

As can be seen from Table 2, compared with the undoped Na₃V₂(PO₄)₃ in Example 1, the dually doped sodium vanadium phosphate material provided in Examples 4 to 10 and 14 to 20 of the present disclosure can not only maintain good structural stability, but also have high open-circuit voltage, narrow band gap, and low energy barrier for Na ion migration, thus resulting in high energy density and good rate performance. Additionally, by comparing Examples 11 to 13 with Examples 1 to 3 in Table 1, it can be seen that when Na₃V₂(PO₄)₃ is only doped with the same content of As without iron, the cell volume of the obtained material is larger, the cell volume change rate of the fully charged state vs uncharged state is smaller, and the energy barrier for migration of sodium ions is reduced. As a result, the rate performance of the battery is improved, but the open-circuit voltage and conductivity of the material are reduced slightly. Additionally, when Na₃V₂(PO₄)₃ is doped with the same amount of As, Sb or Bi, the open-circuit voltage of the material can be further improved after Mn is doped at V site.

To further support the beneficial effects of the embodiments of the present disclosure, the materials of the above examples and comparative examples were made into batteries and their electrochemical performances were tested. relevant results are shown in Table 3.

The manufacturing process of the battery was as follows: ① Preparation of positive electrode sheet: The positive active material of each example or comparative example, the conductive agent acetylene black, and the binder polyvinylidene fluoride (PVEF) were added into the solvent NMP (N-methylpyrrolidone) according to a weight ratio of 88: 6: 6, and uniformly stirred to obtain a positive electrode slurry. The positive electrode slurry was coated on a positive electrode current collector that was an aluminum foil, dried, rolled and cut, to obtain a positive electrode sheet. ② Preparation of negative electrode sheet: The negative electrode active material (specifically hard carbon) and the binder (specifically styrene-butadiene rubber (SBR) and sodium carboxymethyl cellulose (CMC-Na) at a weight ratio of 2:3) were mixed in ionic water according to a weight ratio of 95: 5, and stirred until uniform, to obtain a negative electrode slurry. The negative electrode slurry was coated on a negative electrode current collector that was a copper foil, dried, rolled and cut, to obtain a negative electrode sheet. ③ Assembly of battery: The positive electrode sheet, a separator, and the negative electrode sheet were stacked sequentially to obtain a dry battery cell. The dry battery cell was wound and placed in an aluminum-plastic film that was an outer packaging foil, and an electrolyte solution was injected. After vacuum packaging, standing, formation, shaping and other procedures, the preparation of the sodium full battery was completed.

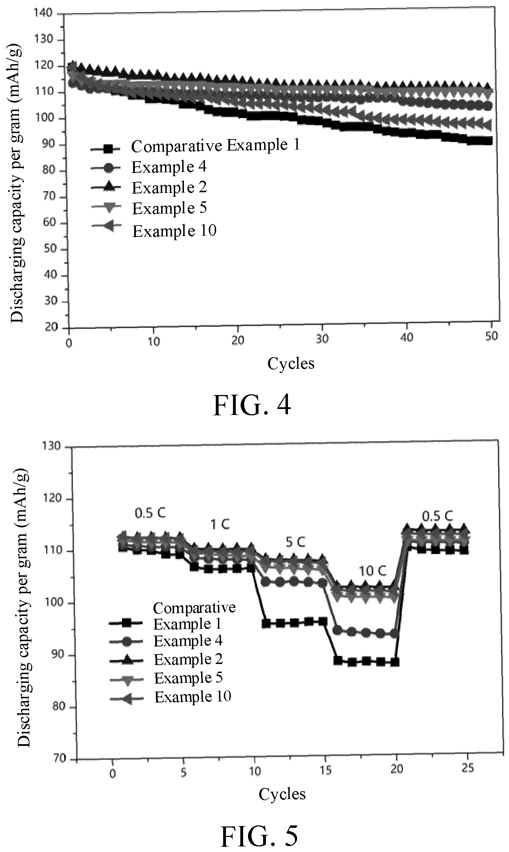

The battery of each example and comparative example were tested for the following electrochemical performances.
1) Cycle performance: Each battery was subjected to a charging and discharging cycle test at a rate of 0.5C at 25°C. The voltage range was 2.5 to 4.3V. When charged, the battery was charged at a constant current of 0.5C until the cut-off voltage was 4.3 V, and then charged at a constant voltage until the cut-off current is 0.05C. When discharged, the battery was discharged at a constant current of 0.5C to 2.5V. The first-cycle discharging capacity per gram and the capacity retention rate of each battery after 50 cycles were recorded. The first-cycle discharging capacity per gram is equal to the ratio of the first-cycle discharging capacity of each sodium full battery to the weight of the positive electrode active material in the battery. The capacity retention rate after 50 cycles is equal to the ratio of the discharging capacity after 50 cycles to the first-cycle discharging capacity.
   Additionally, the discharging curve in the charging-discharging curve obtained by constant-current charging and discharging of each battery at 0.5C was integrated and divided by the discharging capacity, to obtain the average voltage of each battery. The relevant results are summarized in Table 3 below, and the cycle curves of some examples and comparative examples are summarized in FIG 4.
2) Rate performance: The change of the discharging capacity per gram of each battery at 0.5C, 1C, 5C, and 10C vs cycles was tested at 25°C. The voltage range was 2.5 to 4.3V. The rate performance curves of some examples and comparative examples are shown in FIG. 5. When the discharging capacity per gram was calculated, the ratio of the discharging capacity to the weight of the positive electrode active material at a certain current density was regarded as the discharging capacity per gram at this current density. Table 3 summarizes the first-cycle discharging capacity per gram of each battery at a rate of 10C, and the ratio of the first-cycle discharging capacity at a rate of 10C to the first-cycle discharging capacity at a rate of 0.5C.

**Table 3**

| | Average voltage (V) | Capacity retention rate after 50 cycles at 0.5C (%) | First-cycle discharging capacity per gram at 10C (mAh/g) | First-cycle discharging capacity ratio at 10C/0.5C (%) |
|---|---|---|---|---|
| Comparative Example 1 | 3.27 | 95.59% | 87.744 | 75.84% |
| Comparative Example 2 | 3.29 | 93.20% | 82.12 | 72.51% |
| Example 1 | 3.33 | 96.15% | 89.12 | 81.05% |
| Example 2 | 3.41 | 96.80% | 93.4 | 86.69% |
| Example 3 | 3.45 | 94.63% | 98.12 | 85.89% |
| Example 4 | 3.32 | 96.33% | 102.28 | 87.18% |
| Example 5 | 3.36 | 95.93% | 100.3 | 85.53% |
| Example 6 | 3.38 | 96.28% | 90.22 | 79.69% |
| Example 7 | 3.34 | 96.03% | 92.22 | 81.25% |
| Example 8 | 3.36 | 96.17% | 95.21 | 84.51% |
| Example 9 | 3.38 | 96.03% | 92.12 | 82.16% |
| Example 10 | 3.42 | 96.75% | 101.505 | 85.41% |
| Example 11 | 3.31 | 97.05% | 91.12 | 78.15% |
| Example 12 | 3.34 | 96.20% | 92.1 | 80.19% |
| Example 13 | 3.39 | 97.93% | 95.12 | 84.22% |
| Example 14 | 3.35 | 96.15% | 89.56 | 77.78% |
| Example 15 | 3.32 | 95.97% | 88.65 | 78.69% |
| Example 16 | 3.49 | 96.12% | 93.19 | 79.61% |
| Example 17 | 3.51 | 97.19% | 94.89 | 82.28% |
| Example 18 | 3.72 | 96.05% | 89.12 | 81.72% |
| Example 19 | 3.63 | 96.07% | 91.65 | 79.19% |
| Example 20 | 3.56 | 96.62% | 91.07 | 80.24% |

As can be seen from Table 3, compared with the sodium battery prepared with the material of Comparative Example 1, the sodium batteries prepared with the materials provided in Examples 1 to 20 of the present disclosure have a higher voltage plateau and a higher first-cycle discharging capacity ratio at 10C/0.5C, indicating a higher rate performance of the battery. Moreover, the cycle performance of the battery is not obviously reduced. Additionally, the batteries of Examples 1 to 7 and 14 to 15 have a higher voltage plateau and better rate performance than the battery of Comparative Example 2.

Exemplary embodiments of the present disclosure have been described above. It should be noted that several improvements and modifications can be made by those of ordinary skill in the art without departing from the principle of the present disclosure, which shall fall within the protection scope of the present disclosure.

## Claims

1. A positive electrode active material, the positive electrode active material comprising a general formula of A₃V₂₋ₓMₓ(P_{1-y}E_{y}O₄)₃, wherein A represents an alkali metal element; M represents a doping element that substitutes V; M comprises one or more of a transition metal element and a rare earth element; E represents a doping element that substitutes P; E comprises one or more of As, Sb, and Bi; and 0≤x≤1, and 0<y≤1/3.

2. The positive electrode active material according to claim 1, wherein M comprises one or more of Cr, Mn, Fe, Co, Ni, Cu, Zn, Ti, Mo, Nb, Zr, La, and Ce.

3. The positive electrode active material according to claim 1, wherein M comprises one or more of Cr, Mn, Fe, and Ti.

4. The positive electrode active material according to any one of claims 1 to 3, wherein E is one or more of As and Bi.

5. The positive electrode active material according to claim 1, wherein M is Fe, and E is As.

6. The positive electrode active material according to any one of claims 1 to 5, wherein A comprises one or more of Li, Na, and K.

7. The positive electrode active material according to any one of claims 1 to 6, wherein x is in the range of 0.001≤x≤1.

8. The positive electrode active material according to any one of claims 1 to 6, wherein x is in the range of 0.01≤x≤1.

9. The positive electrode active material according to any one of claims 1 to 6, wherein x is in the range of 0.3<x<0.5.

10. The positive electrode active material according to any one of claims 1 to 9, wherein y is in the range of 1/18<y<1/3.

11. The positive electrode active material according to any one of claims 1 to 9, wherein y is 1/6, 1/3, or 1/18.

12. The positive electrode active material according to any one of claims 1 to 9, wherein y is in the range of 1/18<y<1/6.

13. The positive electrode active material according to any one of claims 1 to 9, wherein y is in the range of 1/6≤y≤1/3.

14. A method for preparing a positive electrode active material, comprising the following steps:
mixing element sources of various elements in the positive electrode active material A₃V₂₋ₓMₓ(P_{1-y}E_{y}O₄)₃ to be prepared, to obtain a precursor material (10), wherein A represents an alkali metal element; M represents a doping element that substitutes V; M comprises one or more of a transition metal element and a rare earth element; E represents a doping element that substitutes P; E comprises one or more of As, Sb, and Bi; and 0≤x≤1, and 0<y≤1/3; and
sintering the precursor material, to obtain the positive electrode active material (20).

15. The preparation method according to claim 14, wherein the precursor material is prepared by a sol-gel method comprising: mixing an A source, a vanadium source, a phosphorus source, an M source and an E source in a solvent, and heating and stirring the obtained mixed solution until the solvent is evaporated to dryness, to obtain the precursor material.

16. The preparation method according to claim 14, wherein the precursor material is prepared by solid-phase ball milling comprising: ball milling an A source, a vanadium source, a phosphorus source, an M source and an E element-containing doping anion source in the absence of a solvent, to obtain the precursor material.

17. The preparation method according to any one of claims 14 to 16, wherein the sintering is carried out under an inert gas atmosphere, the sintering temperature is 400 to 900°C, and the sintering time is 10 to 30 h.

18. A positive electrode, the positive electrode comprising a positive electrode active material according to any one of claims 1 to 13, or a positive electrode active material prepared by the method according to any one of claims 14 to 17.

19. A secondary battery, the secondary battery comprising a positive electrode according to claim 18.

20. An electric device, the electric device comprising a secondary battery according to claim 19.
